# EUROPEAN PATENT APPLICATION

(11) **EP 4 644 481 A1**
(43) Date of publication of application: **05.11.2025**
(21) Application number: 25172410.0
(22) Date of filing: 24.04.2025
(51) Int. Cl.: C08L 23/22, C08L 23/283

(54) **POLYMER COMPOSITIONS AND METHODS OF PREPARATION THEREOF**

(30) Priority: 30.04.2024 US 202463640279 P
(71) Applicant: Kraton Polymers Nederland B.V., 1322 CE Almere (NL)
(72) Inventor: Truong, Phuc, Houston, 77084 (US); Venkatkrishna, Raghavendran, Houston, 77084 (US)
(74) Representative: Henkel & Partner mbB

(57) **Abstract**

The disclosure relates to a rubber composition containing a butyl rubber and an epoxy functionalized styrenic block copolymer (e-SBC) for improved properties. The styrenic block copolymer (SBC) can be unhydrogenated for an epoxy functionalized styrenic block copolymer (e-USBC), or hydrogenated for the e-SBC to be an epoxy functionalized hydrogenated styrenic block copolymer (e-HSBC), or partially hydrogenated for an epoxy functionalized partially hydrogenated styrenic block copolymer (e-PHSBC). The epoxy-modified styrenic block copolymer has a degree of epoxidation of 1- 99 wt.% in the block B. The rubber composition further comprises a polyolefin, a tackifier and an optional additive. The improved rubber composition can be used for making tires, inner tubes, pharmaceutical stoppers, construction sealants, hoses, and mechanical goods e.g. gaskets, rubber boots, seal rings etc.

## Description

### FIELD

The disclosure relates to a butyl rubber composition containing epoxidized styrenic block copolymer, and method of preparation thereof.

### BACKGROUND

Butyl rubber-based rubber compositions find utility in many applications such as tire inner tubes, inner liners for tubeless tires, ball bladders, curing bladders, belts, hoses, seals, stoppers, adhesives, sealants, mastics, tapes, and waterproofing membranes to name a few. Butyl rubber is typically halogenated forming a halogenated butyl rubber such as brominated butyl rubber or chlorinated butyl rubber, for use in the tire industry as an air barrier for inner liner or inner tube of a tire. For such use, butyl rubber is engineered to have a balance of properties; for example, durability (e.g., tensile strength and tear resistance), rolling resistance, and traction. Retention of air in the tire inner liner or inner tube is important for the tire performance.

However, halogenated diene rubbers such as natural rubber, polybutadiene, polyisoprene, and poly(styrene-butadiene) are difficult to obtain in a form that is advantageous in rubber compositions, particularly for tires inner liner. This is partly because halogenation methods of butyl rubber typically cause high amounts of gel and poorly controlled microstructures, affecting its properties. In the halogenation process, premature thermal dehydrohalogenation may happen, causing crosslinking and other effects on processability, thermal stability, and chemical compatibility with other materials.

There is a need for improved halogenated butyl rubber for enhanced properties in the end-product.

### SUMMARY

In one aspect, the disclosure relates to a rubber composition comprising, consisting essentially of, or consisting of 100 parts by weight (phr) of a butyl rubber and 0.1 to 54 phr of an epoxy-modified styrenic block copolymer (e-SBC). The e-SBC includes at least one monoalkenyl arene block A, at least one conjugated diene block B, and at least one epoxy functional group or derivative thereof. The epoxy modification is present in an amount of 1-99 wt.% in the conjugated diene block B. The SBC prior to epoxy modification with at least one epoxy functional group or derivative thereof, is selected from the group consisting of: (i) an unhydrogenated block copolymer, (ii) a partially hydrogenated block copolymer having a residual unsaturation (RU) of 2-15 mmol/g, and (iii) a hydrogenated block copolymer. The composition further contains less than 5 phr of epoxidized soybean oil (ESBO).

In another aspect, the styrenic block copolymer, prior to epoxy modification with at least one epoxy functional group or derivative thereof, is a partially hydrogenated block copolymer (e-PHSBC), having a residual unsaturation of less than 10 mmol/g.

In yet another aspect, the rubber composition containing 0.5 to 5 phr epoxidized styrenic block copolymer has a yellowness index of at least 10% lower than a rubber composition does not contain any epoxidized styrenic block copolymer, after 20 days of aging at 80 °C, measured according to ASTM E313.

In one aspect, the degree of epoxidation of the conjugated diene mid-block is from 1-99 wt.%.

In yet another aspect, the butyl rubber is a halogenated butyl rubber selected from the group consisting of: a brominated butyl rubber, a chlorinated butyl rubber, and mixtures thereof.

### DESCRIPTION

The following terms will have the following meanings:

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B, and C; or A, B, and C, or any other all combinations of A, B, and C.

A list of embodiments presented as "A, B, ..., or C" is to be interpreted as including A only, B only, C only, "A or B," "A or C," "B or C," or "A, B, or C."

"Block" as used herein refers to a section of a polymer molecule that comprises a plurality of constitutional units (monomers) and possesses at least one constitutional or configurative feature that does not appear in the immediately adjacent sections (blocks).

"Conjugated diene" refers to an organic compound containing conjugated carbon-carbon double bonds and a total of 4 to 12 carbon atoms, such as 4 to 8 carbon atoms, which can be any of 1,3-butadiene and substituted butadienes, including but not limited to 1,3 cyclohexadiene, isoprene, 2,3-dimethyl-1 ,3-butadiene, 1-phenyl-1,3-butadiene, 1,3-pentadiene, 3-butyl-1,3-octadiene, chloroprene, and piperylene, or any combination thereof. In embodiments, the conjugated diene block comprises a mixture of butadiene and isoprene monomers. In embodiments, 1,3-butadiene alone is used.

"Butadiene" refers to 1,3-butadiene.

"Monovinyl arene," or "monoalkenyl arene," or "vinyl aromatic" refers to an organic compound containing a single carbon-carbon double bond, at least one aromatic moiety, and a total of 8 to 18 carbon atoms, such as 8 to 12 carbon atoms. Examples include any of styrene, o-methyl styrene, p-methyl styrene, p-tertbutyl styrene, 2,4-dimethyl styrene, alpha-methyl styrene, vinyl naphthalene, vinyl toluene, vinyl xylene, or mixtures thereof. In embodiments, the monoalkenyl arene block comprises a substantially pure monoalkenyl arene monomer. In some embodiments, styrene is the major component with minor proportions (< 10 wt. %) of structurally related vinyl aromatic monomers such as o-methylstyrene, p-methyl styrene, p-tert-butyl styrene, 2,4- dimethyl styrene, a-methylstyrene, vinyl naphtalene, vinyl toluene, vinyl xylene, or combinations thereof. In embodiments, styrene alone is used.

"Vinyl content" refers to the content of a conjugated diene that is polymerized via 1,2-addition in the case of butadiene, or via 3,4-addition in the case of isoprene, resulting in a monosubstituted olefin, or vinyl group, adjacent to the polymer backbone. Vinyl content can be measured by proton nuclear magnetic resonance spectrometry (1H NMR).

"Polystyrene content" or PSC of a block copolymer refers to the % weight of vinyl aromatic, e.g., polystyrene in the block copolymer, calculated by dividing the sum of molecular weight of all vinyl aromatic blocks by the total molecular weight of the block copolymer. PSC can be determined by using any suitable methodology such as proton nuclear magnetic resonance spectrometry (1HNMR).

"Coupling efficiency," expressed as % CE, is calculated using the values of the wt. % of the coupled polymer and the wt. % of the uncoupled polymer. The wt. % of the coupled polymer and the uncoupled polymer can be determined using the output of a differential refractometer detector. The intensity of the signal at a specific elution volume is proportional to the amount of material of the molecular weight corresponding to a polystyrene standard detected at that elution volume.

"Coupling Agent" or "X" refers to the coupling agents commonly used in the making of styrenic block copolymers art, e.g., silane coupling agents such as isobutyl-trimethoxy silane, methyltrimethoxysilane; polyvinyl compounds, polyvinyl arene, di- or multi-vinylarene compounds; di- or multi-epoxides; di- or multi-isocyanates; di- or multi-alkoxysilanes; di- or multi-imines; di-or multi-aldehydes; di- or multi-ketones; alkoxy-tin compounds; di- or multi-halides, such as silicon halides and halosilanes; mono-, di-, or multi-anhydrides; di- or multi-esters; tin tetrachloride; tetramethyl orthosilicate.

"Molecular weight" or Mw refers to the styrene equivalent molecular weight in kg/mol of a polymer block or a block copolymer. Mw can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. Mw of polymers measured using GPC so calibrated are styrene equivalent molecular weights or apparent molecular weights. Mw expressed herein is measured at the peak of the GPC trace and is commonly referred to as styrene equivalent "peak molecular weights," designated as Mₚ.

"Residual Unsaturation" or "RU" refers to the level of unsaturation, i.e., carbon-carbon double bonds per gram of block copolymer. RU can be measured using proton nuclear magnetic resonance spectrometry (1H NMR).

"Residual Unsaturation in rubber (RUrub)" refers to the levels of unsaturation, i.e., carbon-carbon double bonds per gram of a block copolymer corrected for its aromatic content. It is calculated via the following equation: RUrub = RU * 100/(100-PSC). RUrub can be measured using proton nuclear magnetic resonance spectrometry (1H NMR).

"Hydrogenation level" (H₂%) refers to the level of saturation of the olefinic double bonds in the block copolymer. It can be calculated using the following equation when producing the p-HSBC: H₂% = 100* (RU before hydrogenation - RU after hydrogenation) / RU before hydrogenation.

"PHSBC" refers to and is used interchangeably with partial or partially hydrogenated styrenic block copolymer.

"Rubber block" refers to a conjugated diene polymer block.

"Rubber" refers to any polymer or composition of polymers consistent with the ASTM D1566 definition: "a material that is capable of recovering from large deformations, and can be, or already is, modified to a state in which it is essentially insoluble (but can swell) in boiling solvent."

"Vulcanized rubber" refers to a crosslinked elastic material compounded from an elastomer, susceptible to large deformations by a small force capable of rapid, forceful recovery to approximately its original dimensions and shape upon removal of the deforming force as defined by ASTM D1566.

"Hydrocarbon" refers to molecules or segments of molecules containing primarily hydrogen and carbon atoms. In some molecules, hydrocarbons also include halogenated versions of hydrocarbons and hydrocarbons containing heteroatoms.

"Butyl-based composition" is also sometimes referred to herein as "butyl-based elastomer composition," "butyl-based rubber composition," "isobutylene-based composition," "isobutylene-based elastomer composition" and/or "isobutylene-based rubber composition."

"Radial copolymer" refers to a branched copolymer having segments, or blocks of styrene and conjugated diene monomers.

"Phr" refers to parts per hundred rubber and is a measure of a component of a composition relative to 100 parts by weight of the rubber in the composition. Unless specified otherwise, the total phr (whether one, two, three, or more different rubbers) is always defined as 100 phr. All other non-rubber components are a ratio of the 100 parts of rubber and expressed in phr.

The term "butyl rubber composition" is used interchangeably throughout this patent to refer to a composition comprising butyl rubber or halogenated butyl rubber.

"Degree of functionalization" or "degree of epoxidation" refers to the percentage by weight of the total available reactive sites-typically carbon-carbon double bonds in the conjugated diene blocks of a styrenic block copolymer-that have been chemically modified with epoxy functional groups or their derivatives.

The disclosure relates to a butyl rubber composition containing epoxy-modified styrenic block copolymer (e-SBC) for improved properties. The styrenic block copolymer (SBC) can be unhydrogenated to be an epoxy-modified styrenic block copolymer (e-USBC), or hydrogenated to be an epoxy-modified hydrogenated styrenic block copolymer (e-HSBC), or partially hydrogenated to be an epoxy-modified partially hydrogenated styrenic block copolymer (e-PHSBC). The butyl rubber composition contains less than 5 phr of epoxidized soybean oil (ESBO).

Butyl Rubber: The butyl rubber component of a rubber composition is a copolymer of an isoolefin and a conjugated multiolefin. The copolymer comprises a major portion of isoolefin and a minor amount, e.g., 30 wt.%, or 20 wt.%, or 10 wt. % of a conjugated multiolefin. In embodiments, the copolymer comprises 85-99.5 wt.%, or 95-99.5 wt.% of a C₄ to C₇ isoolefin, such as isobutylene, and 15-0.5 wt.%, or 5-0.5 wt.% of a multiolefin of 4-14 carbon atoms.

In embodiments, butyl rubber is a halogenated rubber or halogenated butyl rubber such as brominated butyl rubber or chlorinated butyl rubber. General properties and processing of halogenated butyl rubbers are described as per the known methods.

In embodiments, halogenated butyl rubber is produced from the halogenation of butyl rubber. In embodiments, the olefin polymerization feeds employed in producing the halogenated butyl rubber are olefinic compounds. The butyl rubber polymers are prepared by reacting a co-monomer mixture, the mixture having at least one (1) C4 to C7 isoolefin monomer component such as isobutylene with (2) a multiolefin, or conjugated diene, monomer component. The iso-olefin ranges from 70 to 99.5 wt. % of the total comonomer mixture, or 85 to 99.5 wt. %. The conjugated diene components are present from 30 -0.5 wt.%, or 15 - 0.5 wt. %, or 8 to 0.5 wt. % of the co-monomer mixture.

In embodiments, halogenated butyl rubber is produced by the halogenation of a butyl rubber product by known method of halogenating polymers such as butyl polymers. The butyl rubber is halogenated in hexane diluent at from 40 to 60° C. using bromine (Br₂) or chlorine (Cl₂) as the halogenation agent. The halogenated butyl rubber has a Mooney viscosity of from 20 to 70 (ML 1+8 at 125° C.), or from 25 to 55. The halogen content is from 0.1 to 10 wt. %, or 1 to 2.2 wt. %, or 0.5 to 5 wt. %, based on the weight of the halogenated butyl rubber.

In embodiments, the halogenated butyl rubber is a bromo-butyl rubber (BIIR) or a chloro-butyl rubber (CIIR). In embodiments, BIIR comprises up to 1.6 wt. %, or < 1 wt.%, or < 0.5 wt.%, or 0.05 - 1.5 wt.% epoxidized soybean oil (ESBO).

Epoxy-Modified Styrenic Block Copolymer (e-SBC): The epoxy-modified styrenic block copolymer contains at least one monoalkenyl arene polymer block A, at least one conjugated diene polymer block B, and at least an epoxy functional group or derivative thereof. Derivatives thereof refer to compounds that contain epoxy (epoxide) functional group as a structural component, with additional substituents or modifications, e.g., alkyl or aryl groups, functional groups such as hydroxyl or amino groups, crosslinking agents, modifiers, chiral substituents, and polymer chains of epoxy monomers. Modified SBC, epoxidized-SBC (e-SBC), or epoxy-grafted SBC, or epoxy-functionalized SBC are used interchangeably, referring to a polymer where at least an epoxy group is grafted on the backbone, or on the vinyl group adjacent to the polymer backbone of the styrenic block copolymer.

The e-SBC is formed by functionalizing or grafting a styrenic block copolymer (SBC) precursor with an epoxidizing agent, where the unsaturated double bond of the conjugated diene in the SBC is epoxidized.

The SBC precursor or base polymer can be prepared by copolymerizing one or more olefins, including at least one conjugated diene, by themselves or with one or more monoalkenyl arene monomers. The copolymers may or may not be tapered, the individual blocks may be homopolymers or random copolymers, and the polymer molecule may be linear or branched.

In embodiments, the SBC precursor has a structure selected from the group of A-B, A-B-A, A-B-A-B, (A-B-A)ₙX, (A-B)ₙX, and mixtures thereof, wherein n is a positive integer, X is the residue of a coupling agent. Each block A is predominantly a polymer block of monoalkenyl arene monomers and each polymer block B is predominantly a polymer block of conjugated diene monomers. Standard analytical techniques including 1H NMR can be used to detect the presence of and analyze the e-SBC structure.

The designation of "n," refers to the number of "arms" or "branches" in each of the structures, with n ≥ 1. In embodiments, n ranges from 1-20, or 1-10, or 1-7.

In embodiments, the monoalkenyl arene monomers in each block A is selected from the group comprising, styrene, alpha-methyl styrene, methyl styrene, para-methyl styrene, ethyl styrene, propyl styrene, butyl styrene, tert-butyl styrene, dimethyl styrene, vinyl toluene, isomers of vinyl toluene, vinyl xylene, 1,1-vinyl biphenyl, vinyl naphthalene, vinyl anthracene, and mixtures thereof.

In embodiments, the conjugated diene monomer in each block B is independently selected from the group consisting of, 1,3-butadiene, isoprene, 2,3-dimethyl-1,3-butadiene, 1-phenyl-1,3-butadiene, 1,3-pentadiene, 1,3-hexadiene, 3-butyl-1,3-octadiene, myrcene, farnesene, 1,3-cyclohexadiene, piperylene, and mixtures thereof. In embodiments, block B is selected from poly(isoprene-r-butadiene), poly(butadiene-r-styrene), wherein the -r- refers to a random copolymer, e.g., "poly(isoprene-r-butadiene)" means polyisoprene butadiene random copolymer.

In embodiments, the SBC precursor has an average 1,2-vinyl or 3,4-vinyl content of 6-80%, or 10-75%, or 15-45%, or 20-40 wt. %, or 25-35%, or >35%, or < 80%. Vinyl content can be measured before or after hydrogenation, via 1H NMR.

In embodiments, the SBC precursor is unhydrogenated (USBC). The USBC is epoxidized forming an epoxy functionalized (unhydrogenated) styrenic block copolymer (e-USBC). In other embodiments, the SBC precursor is first hydrogenated at a hydrogenation level of at least 97% (HSBC). The HSBC is then epoxidized forming an epoxy functionalized hydrogenated styrenic block copolymer (e-HSBC). In yet other embodiments, the SBC precursor is partially hydrogenated before epoxidation (PHSBC). The PHSBC is then epoxidized forming an epoxidized partially hydrogenated styrenic block copolymer (e-PHSBC).

As used herein, SBC precursor can be any of USBC, HSBC, or PHSBC, unless specifically specified otherwise.

In embodiments, each polymer block A in the SBC precursor has a molecular weight (Mp) of 5 - 50, or 10 - 45, or 15 - 40, or 20 - 35, or 5 - 30, or 20 - 50, or 3 - 20, or 5 - 15, or 4 - 12, or 3 - 10, or < 60, or < 50, or < 15, or > 3, or > 10 kg/mol.

In embodiments, each polymer block B in the SBC precursor has a molecular weight (Mp) of 2 - 350, or 5 - 300, or 7 - 250, or 10 - 200, or 5 - 150, or 3 - 100 kg/mol.

In embodiments, the SBC precursor has a Mw of 10 - 500 kg/mol, or 30- 450 kg/mol, or 60 - 400 kg/mol, or 75-250 kg/mol, or < 400 kg/mol, or < 300 kg/mol, or < 200 kg/mol.

In embodiments, the SBC precursor has a total polystyrene content (PSC) prior to hydrogenation is 10-50%, 15-50%, or 20-50%, or 20-45%, or > 10%, or > 15%, or > 20%, or > 25%, or < 50%, or < 45%, or < 40%.

In embodiments, the SBC precursor contains 5-70 wt.%, or 10-65 wt.%, or 15-60 wt. %, or 20-45 wt.%, or > 5 wt. %, or < 70 wt.% of the monoalkenyl arene compound, and from 30-95 wt. %, or 35-90 wt. %, 45-80 wt. %, or > 30 wt. %, or < 95 wt. % of the conjugated diene (in each case based on the total monomers employed), as copolymerized units.

In embodiments, the SBC precursor is HSBC, having a hydrogenation level of > 97%, or ≥ 98%, or < 99.5%, or 97.5-99.5%, or 98-99.5%.

In embodiments, the SBC precursor is PHSBC, having a hydrogenation level of 15-97%, or > 20%, or 30-95%, or > 40%, or < 70%, or < 80%, or < 97%. Hydrogenation level refers to the percentage of original unsaturated bonds which become saturated upon hydrogenation. Hydrogenation level in vinyl aromatic polymers can be determined using UV-VIS spectrophotometry or proton NMR. Hydrogenation level in the diene polymers can be determined using 1H NMR. In embodiments, the partially hydrogenated conjugated diene has a residual unsaturation or RU of < 20 mmol/g, or <15 mmol/g, or < 10 mmol/g, or < 8 mmol/g, or < 5 mmol/g, or < 4 mmol/g, > 2 mmol/g, or 2-15 mmol/g. RU can be determined using 1H NMR.

In embodiments, the PHSBC is epoxidized by known methods such as the use of a peracid exemplified by peracetic acid, hydrogen peroxide in the presence of acetic acid, and sulfuric acid or hydrogen peroxide in the presence of a low molecular weight fatty acid such as formic acid.

In embodiments, the peroxides used as functionalization / epoxidizing agent include per-carboxylic acids such as performic acid, peracetic acid, perpropionic acid, 3-chloroperoxybenzoic acid, potassium peroxymonosulfate, and mixtures thereof.

In embodiments, the e-SBC comprises epoxy functional groups in an amount of 1- 35, or 2 - 30, or 3 - 25, or 5 - 20, or 6 - 10 wt.%, based on the total weight of the rubber block in the SBC precursor.

In embodiments, the e-SBC has a degree of epoxidation of 1-99%, or preferred 10-90%, or most preferred 20-80%, relative to the polymer block susceptible to functionalization, i.e., block B. The amount of epoxy in e-SBC can be measured by titration, FTIR, or 1H NMR.

In embodiments, the e-SBC is in crumb, pellet, flake, powder, or micro pellets form having an average particle size of < 2000 µm, or < 1000 µm. In embodiments, when the e-SBC is ground down to < 1000 µm, the e-SBC is dusted with talc, silica, magnesium stearate, calcium carbonate, polyethylene glycol, kaolin, barium sulfate, or mixtures there.

In embodiments, the rubber composition comprises a mixture of different e-SBCs, e.g., a mixture of at least two different e-USBCs, or e-HSBCs or e-PHSBCs, or a mixture of e-USBC and e-PHSBC, or a mixture of e-HSBC and e-PHSBC, etc. In embodiments, the rubber composition comprises a mixture of different e-PHSBC's, with one e-PHSBC formed from PHSBC having a low vinyl content and the other e-PHSBC formed from a PHSBC having a high vinyl content. Low vinyl content means the PHSBC precursor having an average 1,2-vinyl or 3,4-vinyl content of < 50 %, or < 40 %, or < 38%, or < 35%, or < 30%, or < 25%, or < 20%, or < 15%. High vinyl content means the PHSBC precursor having an average 1,2-vinyl or 3,4-vinyl content of > 50%, or > 55%, or > 60 %, or > 65%, or < 80%.

In embodiments, the e-SBC is present in an amount of 0.1-54 phr, 0.5 to 40 phr, or preferred 1-10 phr, or most preferred 1-5 phr, based on 100 phr of butyl rubber, whether added or used a slurry stabilizer in the making of butyl rubber or for blending with butyl rubber in end-use applications.

Applications of e-SBC: The e-SBC can be added to the butyl rubber manufacturing process, or it can be blended into a butyl rubber (and optional components) in the process of forming a rubber composition.

Direct Addition to Butyl Rubber Manufacturing: In embodiments, the e-SBC is added directly to the production process of butyl rubber to produce a modified butyl rubber. In embodiments, the epoxy functionality is subjected to a halogenation process to form a halobutyl rubber, providing an in-situ dehydrohalogenation suppression along with a star branch formation and slurry stabilization.

Blending with Butyl Rubber: In an embodiment, the e-SBC is blended into butyl rubber by a method selected from the group consisting of internal mixing (including Banbury mixing), two-roll milling, compounding extrusion, and dry blending, to obtain a rubber composition. The obtained blend is further blended with one or more additional components, such as polyolefins, to form the final rubber composition.

Additional Thermoplastic Polymer - Polyolefin: In one embodiment, the rubber composition further comprises at least another thermoplastic polymer, e.g., polyolefins. Examples of polyolefins include: polyethylene (PE), polypropylene (PP), polybutylene (PB), homopolymers of propylene, copolymers of propylene and ethylene, copolymers of propylene and 1-butene or other higher a-olefins, terpolymers of ethylene, propylene, and 1-butene, ethylene-propylene rubber i.e., ethylene propylene diene monomer, norbornene based elastomers, polyolefin elastomer (POE), and mixtures thereof.

In embodiments, the polyolefin has a density of < 0.86 g/cm³, or < 0.87 g/cm³, or < 0.88 g/cm³, or < 0.89 g/cm³, < 0.90 g/cm³, or < 1 g/cm³ according to ISO 1183 and a softening point of 10-120 °C, or < 120 °C, or < 110 °C, or < 100 °C, or < 90 °C, or < 80 °C, or < 70 °C as per ASTM D3104.

In embodiments, the polyolefin is present in an amount of 0 - 70 phr, or 10 - 60 phr, or 15 - 50 phr, or any of 5, 10, 15, 20, 25, 30, 35, 40, 45, 50, 55, 60, 65, 70 phr, or ranges in-between based on 100 phr of the rubber composition.

Tackifiers: In embodiments, a tackifier is added to a rubber composition. The tackifier which can be hydrogenated or partially hydrogenated. Examples of useful tackifiers include, e.g., aliphatic and cycloaliphatic hydrocarbon resins, mixed aromatic and aliphatic modified hydrocarbon resins, aromatic modified aliphatic hydrocarbon resins, and aromatic modified aliphatic hydrocarbon resins (partially) hydrogenated version, partially or fully hydrogenated hydrocarbon resins, terpenes, modified terpenes, hydrogenated terpenes version and combinations thereof, rosin esters, modified rosin esters and copolymers and terpolymers of natural terpenes (e.g., styrene-terpene, alpha-methyl styrene-terpene, and vinyl toluene-terpene), phenolic-modified terpene resins and combinations thereof.

In embodiments, the tackifier is present in an amount of 0.3-15 phr, or 0.5-5.0 phr, or > 0.3 phr, or > 0.5 phr, or <15 phr, or < 10 phr, or < 8 phr, or < 5 phr based on 100 phr of the rubber composition (meaning butyl rubber and e-SBC).

Optional Components - Impact Modifiers: In embodiments, the rubber composition further comprises an impact modifier, e.g., elastomeric copolymers such as ethylene-propylene diene polymers (EPDM's) that may be either unfunctionalized or functionalized with epoxy, anhydride, ortho-ester, oxazoline, sulfonate, or phosphonate groups, carboxylated ethylene-propylene rubbers, silicone rubber, ethylene-acrylic rubber, ethylene-propylene copolymer rubber, ethylene-propylene-diene terpolymer rubber, and poly(butyl acrylate), block copolymers of alkenyl-aromatic compounds, such as e.g., styrene, with polymerizable olefins or dienes, such as for example butadiene, isoprene, chloroprene, ethylene, propylene and butylene, core-shell polymers, and mixture thereof.

Examples of impact modifiers include other styrenic block copolymers, e.g., a diblock, triblock, or radial copolymer with at least one block derived from styrene and at least one other block from at least one of butadiene and isoprene that may be either unfunctionalized or functionalized with epoxy, anhydride, ortho-ester, oxazoline, sulfonate, or phosphonate groups. Examples are triblock copolymers with polystyrene end blocks and diene-derived midblock.

In embodiments, impact modifier if present, is in an amount of up to 45 phr, or 2-40 phr, or 5-25 phr or 10-20 phr based on the 100 phr of the rubber composition.

Optional Additives: In embodiments, the rubber composition further comprises at least one additive selected from the group consisting of flame retardants, drip retardants, dyes, pigments, colorants, additional stabilizers, antistatic agents, additional plasticizers, lubricants, mineral fillers, silica, glass fillers, glass beads, carbon black, etc.

In embodiments, the optional additives, if present, are used in minor amounts of up to 10 phr or < 8 phr or 0.1-5 phr, based on the total weight of the rubber composition.

In embodiments, the rubber composition comprises epoxidized soybean oil (ESBO) in amounts of up to 5 phr, or < 4 phr, or < 2 phr, or < 1 phr, or < 0.5 phr, or < 0.1 phr based on the total weight of the rubber composition. In embodiments, the rubber composition is free of any ESBO, none intentionally added to the rubber composition or to the butyl rubber.

Preparation of Rubber Composition/ Forming Articles: The rubber composition can be prepared first by mixing predetermined amounts of halogenated butyl rubber and e-SBC and then adding polyolefin, tackifier, optional impact modifier, and optional components if any by means of known processing equipment, e.g., a mixer, or by melt-kneading by means of an extruder or kneader, or roll mills, and, if necessary, by compounding / making into pellets or bales for further processing for molded articles.

Once made, the rubber composition can be used to make articles via known methods, e.g., injection molding, blow molding, extrusion, or other known means.

Applications: In embodiments, e-SBC is used as a slurry stabilizer in the production of butyl rubber. In other embodiments, e-SBC is added to butyl rubber for use in making tire innertubes. The halogen derivatives of butyl rubber (e.g., chloro-butyl and bromo-butyl rubber) provide greater vulcanization flexibility and enhance cure compatibility with other, more unsaturated general-purpose elastomers such as natural rubber and styrenebutadiene rubber (SBR). These properties allow the development of more durable tubeless tires with the air retaining inner liner chemically bonded to the body of the tire. In addition to tire applications, halo-butyl rubbers are suitable for pharmaceutical stoppers, construction sealants, hoses, etc.

Properties of Rubber Composition: In embodiment, a rubber composition containing (i) a rubber composition comprising 0.1 - 54 phr of e-SBC, (ii) up to 30 phr of a polyolefin, (iii) up to 5 phr of a tackifier, (iv) up to 40 phr of an optional impact modifier, and (v) up to 10 phr of at least an additive, all based on 100 phr of the rubber composition. The rubber composition exhibits balanced properties, including toughness, stiffness, and processability for use in high-performance applications. In embodiments, the rubber composition has one or more or all of the following properties:

Air permeability of 0.1 to 3.5, or 0.2 to 3, or 0.3 to 2.5, or 0.5 to 2.2, or 0.7 to 2.0, or 0.9 to 1.5 or >0.1, or < 3.5, or < 3.0, or < 2.0cc mm/(m²-day-mmHg) according to MOCON Oxygen Transmission Rate Test Method.

Relaxation modulus in the range of 2,000 to 500,000 Pa, or >2,000 Pa, or > 3,000 Pa, or > 4,000 Pa, or > 10,000 Pa, or > 30,000 Pa, or < 500,000 Pa, or < 400,000 Pa, or < 300,000 Pa, or > 200,000 Pa, measured according to ISO 6914:2021 at 80 °C and 1% strain.

Solution yellowness Index (YI) of < 100, or < 90, or < 80, or < 70 after 20 days of aging at 80 °C in 5 wt.% in hexane, measured according to ASTM E313.

In embodiments, a rubber composition comprising 0.5 to 5 phr of e-SBC (based on 100 phr butyl rubber) is compared with a similar rubber composition but with no e-SBC, the rubber composition with e-SBC shows an improvement in YI, having a YI of > 5%, or > 10%, or > 20%, or < 70% , or 10 - 60% less than the YI of the rubber composition without e-SBC.

Analytical Methods: e-SBC can be detected in the rubber composition using Fourier Transform Infrared Spectroscopy (FTIR) and Nuclear Magnetic Resonance (NMR) spectroscopy. FTIR detects the characteristic absorption bands corresponding to epoxy functional groups (typically near 910-850 cm⁻¹) and aromatic C=C bonds from styrene moieties. NMR spectroscopy, particularly 1 H-NMR, provides structural confirmation by identifying proton environments consistent with aromatic (styrenic) and aliphatic (diene-based) units, as well as epoxy-bearing protons.

The block structure of the SBC-including the monoalkenyl arene block and the conjugated diene block can be identified using 1 H-NMR spectroscopy, with styrene blocks showing aromatic proton peaks between 6.3-7.2 ppm, and diene blocks displaying olefinic or aliphatic proton signals depending on the hydrogenation state. Raman spectroscopy may be used as a complementary method to assess unsaturation levels and distinguish between unhydrogenated and hydrogenated diene segments.

The degree of epoxidation within a conjugated diene block may be determined using 1 H-NMR by integrating peaks associated with epoxy-bearing methine or methylene protons (2.8-3.2 ppm) and comparing to residual vinyl protons (4.5-5.7 ppm). Alternatively, chemical titration methods such as HCl-acetone or perchloric acid titration can also be used to quantify epoxy content. FTIR spectroscopy, when calibrated against standards, can also be employed to provide semi-quantitative estimates of degree of epoxidation.

The presence of epoxidized soybean oil at low levels (e.g., < 5 phr) may be detected using GC-MS following solvent extraction of the oil phase to identify and quantify level of epoxidized triglycerides and their degradation products. Additionally, 1 H-NMR spectroscopy can also detect epoxy-bearing protons characteristic of epoxidized oils, with FTIR spectroscopy corroborating findings through identification of ester and epoxy bands.

RU may be measured by iodometric titration using iodine monochloride (ICl) and sodium thiosulfate, with calculation based on the volume difference between sample and blank titrations. Alternatively, 1 H-NMR spectroscopy may provide a semi-quantitative estimate of residual vinyl content from signals in the 4.5 to 5.7 ppm range.

As the vinyl content remains essentially the same before and after epoxidation, the average vinyl content (e.g., 1,2-vinyl for butadiene or 3,4-vinyl for isoprene) of a partially hydrogenated styrenic block copolymer precursor can be determined by analyzing the rubber composition 1 H-NMR spectroscopy. The polymer is dissolved in a deuterated solvent, and the vinyl methylene and methine signals are integrated and compared to the total olefinic region. This provides a calculated weight or molar percentage of vinyl content.

Total polystyrene content ("PSC") of SBC does not vary much before and after hydrogenation and epoxidation (forming e-SBC). The PSC may be determined using ¹H-NMR spectroscopy to analyze the rubber composition, with the spectrum analyzed to quantify the relative integration of aromatic protons (~ 6.3-7.2 ppm) from styrene blocks compared to aliphatic protons from diene blocks. The ratio is converted into wt. % to yield the PSC the original block copolymer. DSC and GPC with UV detection may be used as supporting techniques.

With respect to the origin and structure of the epoxidized styrenic block copolymer in the rubber composition, the e-SBC may be extracted and analyzed using GPC with multi-angle light scattering (GPC-MALS), 1 H-NMR spectroscopy, and matrix-assisted laser desorption ionization time-of-flight mass spectrometry (MALDI-TOF MS). For unhydrogenated SBC, the presence of epoxy groups at locations previously occupied by vinyl groups supports that the SBC was unhydrogenated before epoxidation. These methods allow inference of the SBC architecture-such as A-B, A-B-A, or (A-B-A)nX-and the identification of multi-arm or coupled structures.

Examples: The following illustrative examples are intended to be nonlimiting. The following test methods are used.

Epoxidized SBC (e-SBC) can be characterized by proton nuclear magnetic resonance spectroscopy (1 H NMR; Varian 500 MHz spectrometer, 23°C) with CD₂Cl₂ as the solvent.

The branching degree can be determined from the difference in intrinsic viscosity (determined by GPC-VIS) or the radius of gyration (determined by GPC-MALS) of a branched sample compared to a linear analog.

Mooney viscosity was measured according to ASTM D1646.

Discoloration (HBr formation) test- Polymer samples are subjected to high temperatures (>80 °C) and high humidity levels for an extended time. Discoloration (brownish color) indicates the formation of HBr.

The following components are used in the examples:

Brominated Butyl rubber (BIIR) is a brominated copolymer of isobutylene and isoprene having a specific gravity of 0.93; a Mooney viscosity target of 46, a minimum of 28, and a maximum of 51; a bromine composition target of 1.03%, a minimum of 0.93%, and a maximum of 1.13%; a calcium composition target of 0.15%, a minimum of 0.12%, and a maximum of 0.18% and regular cure rate grade.

Polyolefin is a metallocene-technology based C2-C3 copolymer with a glass transition temperature of -44 °C and target viscosity of 100-300 mPa.s at 170 °C.

Tackifier (terpene based) is a partially hydrogenated C5/C9 hydrocarbon resin (mixed aliphatic/aromatic resins) with glass transition temperature of 49 °C and softening point of 102 °C.

Partially hydrogenated styrenic block copolymers (PHSBC 1-4) were prepared based on linear triblock structures of styrene and ethylene/butylene (S-E/B-S). These copolymers exhibit a polystyrene content of approximately 29 wt.%, a vinyl content ranging from 36% to 67%, and a number-average molecular weight (Mn) between 55 and 100 kg/mol. The melt flow index at 230 °C under a 5 kg load is 6 g/10 min, measured according to ISO 1133. The copolymers have a styrene-to-rubber ratio of 30:70 and an elongation at break of approximately 500%, as measured by ISO 37.

Table 1 summarizes the characteristics of PHSBC 1-4, which vary in vinyl content, residual unsaturation (RU), and hydrogenation level (H₂%). The weight-average molecular weight (Mw) of the samples falls within the range of 65 to 100 kg/mol.

**Table 1**

| Examples | RU mmol/g | Vinyl (%) | H₂ (%) |
|---|---|---|---|
| PHSBC 1 | 2.4 | 36 | 82 |
| PHSBC 2 | 2.4 | 36 | 82 |
| PHSBC 3 | 3.8 | 37 | 71 |
| PHSBC 4 | 3.9 | 60 | 71 |

Example 1-2: The precursor for the e-SBC or (e-PHSBC) is PHSBC's 1-2. A PHSBC (82% hydrogenation) based on a linear triblock copolymer of styrene and ethylene/butylene (S-E/B-S) with a styrene content of 30 wt.%, vinyl content of 36 wt.%, and with a residual unsaturation level of 2.4 mmol/g was provided. The PHSBC was dissolved in cyclohexane solvent at room temperature. In a separate step, 1.0:0.5 molar solution of formic acid and hydrogen peroxide was reacted to form a performic acid. Half of the performic acid solution was initially added to the PHSBC in cyclohexane solution and the remaining portion was added after 1 hour. The formic acid level was controlled / varied to adjust the level of epoxidation. The reaction was carried out in a batch reactor operating at 60°C, for 3 to 4 hours. All the reaction mixtures were immediately neutralized with sodium bicarbonate solutions to avoid secondary reactions. The reaction mixture was washed twice with 10 % aqueous sodium bicarbonate. The polymer was precipitated in isopropyl alcohol (IPA), washed, and analysed by 1 H NMR to determine the epoxy content. The e-PHSBC sample obtained with epoxy functionality of 5 wt.% (Example 1) and 10 wt. % (Example 2) by weight of the rubber block.

Example 3-4: A PHSBC (71% hydrogenation) based on a linear triblock copolymer of styrene and ethylene/butylene (S-E/B-S) with a styrene content of 30 wt. %, 35 wt. % vinyl content, and with a residual unsaturation level in the range of 2.4 mmol/g to 3.7 mmol/g was provided. The PHSBC was dissolved in cyclohexane solvent at room temperature. In a separate step, 1.0:0.5 molar solution of formic acid and hydrogen peroxide was reacted to form a performic acid. The performic acid was added to the polymer dissolved in cyclohexane in six equal steps during the epoxidation. The formic acid level was controlled / varied to adjust the level of epoxidation. The reaction was carried out in a batch reactor operating at 50 °C, over a reaction time of 8 hours. All the reaction mixtures were immediately neutralized with 10 % of an aqueous sodium bicarbonate solution to avoid secondary reactions. The reaction mixture was washed multiple times with water to arrive at a pH of 7.5. The polymer was then precipitated in methanol, vacuum dried, washed, and analyzed by 1 H NMR to determine the epoxy content. The e-PHSBC samples were obtained with epoxy graft levels of 5 wt. %, 10 wt. %, and 20 wt.% respectively by weight of the rubber block as represented in table 2.

**Table 2**

| Examples | RU (mmol/g) | Epoxy functionality /graft (%) |
|---|---|---|
| Ex-1 (PHSBC1) | 2.4 | 5 |
| Ex-2 (PHSBC2) | 2.4 | 10 |
| Ex-3 (PHSBC3) | 3.8 | 20 |
| Ex-4 (PHSBC4) | 3.9 | 20 |

### Examples 5-9 (incorporation of e-PHSBC into BIIR)

Examples 5: A solution containing 10 wt.% e-PHSBC (corresponding to 0.5 wt.% e-PHSBC relative to BIIR) in toluene was combined with a 10 wt.% BIIR solution in hexane. After mixing thoroughly, the combined solution was cast into a pan and allowed to air-dry overnight. The resulting films were further dried in a vacuum oven at 50 °C for 24 hours. To obtain a uniform plaque suitable for testing, the dried material was heat-pressed at 80 °C for 2 minutes under 30 tons of pressure, a temperature selected to avoid the onset of dehydrohalogenation. The final plaque thickness was approximately 1 mm.

Example 6: The procedure of Example 5 was repeated, except that 1 wt.% e-PHSBC relative to BIIR was used.

Example 7: The procedure of Example 5 was repeated, except that 1.5 wt.% e-PHSBC relative to BIIR was used.

Example 8: The procedure of Example 5 was repeated, except that 2 wt.% e-PHSBC relative to BIIR was used.

Example 9: The procedure of Example 5 was repeated, except that 2.5 wt.% e-PHSBC relative to BIIR was used.

Table 3 represents the formulation of Examples 5-8 with the total epoxy equivalent in BIIR after incorporation of e-PHSBC into BIIR.

**Table 3 (in the table below e-SBC is e-PHSBC).**

| Examples (Ex) | | Ex-5 | Ex-6 | Ex-7 | Ex-8 | Ex-9 |
|---|---|---|---|---|---|---|
| | Unit | BIIR as-is | BIIR + 0.5 wt.% e-SBC | BIIR + 1 wt.% e-SBC | BIIR + 1.5 wt.% e-SBC | BIIR + 2.5 wt.% e-SBC |
| BIIR | wt.% | 98.40 | 98.21 | 97.71 | 97.22 | 96.23 |
| ESBO | wt.% | 1.30 | 1.29 | 1.29 | 1.28 | 1.27 |
| e-SBC | wt.% | - | 0.50 | 1.00 | 1.50 | 2.50 |
| Total | wt.% | 100 | 100 | 100 | 100 | 100 |
| Epoxy eqv in BIIR (from ESBO) | mmol/g | 0.012 | 0.012 | 0.012 | 0.012 | 0.012 |
| Epoxy eqv in BIIR (from e-SBC) | mmol/g | - | 0.015 | 0.031 | 0.046 | 0.077 |
| Total epoxy eqv in BIIR | mmol/g | 0.012 | 0.027 | 0.042 | 0.058 | 0.088 |

Table 4 represents the relaxation modulus data for Examples 5-9, obtained from a stress relaxation test conducted on an ARES G2 Rheometer at 80 °C and 1% strain at different step time (sec), and aging study -yellowness index (YI) measured after samples were aged in oven at 80 °C for 20 days.

**Table 4**

| Step time (s) | Ex 5 (Pa) | Ex 6 (Pa) | Ex 7 (Pa) | Ex 8 (Pa) | Ex 9 (Pa) |
|---|---|---|---|---|---|
| 1.0 | 146,000 | 129,000 | 148,000 | - | 155,000 |
| 10.0 | 69,000 | 61,000 | 74,000 | - | 82,000 |
| 100.0 | 23,000 | 21,000 | 30,000 | - | 38,000 |
| 1.000.0 | 7,000 | 7,000 | 15,000 | - | 23,000 |
| 10,000.0 | 4,000 | 4,000 | 11,000 | - | 18,000 |
| 70,000.0 | 4,000 | 3,000 | 8,000 | - | 11,000 |
| 100,000.0 | 4,000 | 3,000 | 8,000 | - | 10,000 |
| Yellowness Index (YI) | 93.0 | 85.9 | 73.4 | 64.4 | 68.4 |

The relaxation modulus data over increasing step time (sec) reveals that both 1 wt.% and 2.5 wt.% e-PHSBC additions significantly improve the stiffness retention of the BIIR elastomer. At early time points (1-100 s), BIIR + 2.5 wt.% e-PHSBC shows the highest modulus, maintaining 155,000 Pa at 1 s and 38000 Pa at 100 s, outperforming neat BIIR and the 1 wt.% formulation.

As time progresses to 1,000 seconds and beyond, the difference in relaxation behavior becomes more pronounced. At 1,000 seconds, the rubber composition comprising only BIIR exhibits a relaxation modulus of 7,000 Pa. In contrast, compositions containing 1 wt.% and 2.5 wt.% of e-PHSBC exhibit significantly higher relaxation modulus values of 15,000 Pa and 23,000 Pa, respectively. At 100,000 seconds, the BIIR-only composition retains a modulus of 4,000 Pa, whereas the compositions with 1 wt.% and 2.5 wt.% e-PHSBC retain relaxation modulus values of 8,000 Pa and 10,000 Pa, respectively. These results demonstrate that the incorporation of e-PHSBC enhances long-term stiffness retention, with the 2.5 wt.% loading providing the most pronounced improvement. The improved performance is indicative of reduced plasticization effects and enhanced mechanical property stability over time.

The solution Yellowness Index (YI) values show a clear decreasing trend with increasing e-PHSBC content, indicating improved resistance to discoloration under thermal aging conditions (80 °C for 20 days). Pure BIIR exhibits the highest YI at 93, suggesting significant yellowing, whereas the addition of e-PHSBC progressively reduces this value. Notably, 2.5 wt.% e-PHSBC achieves a YI of 64.4, representing a substantial improvement in color stability.

Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. A rubber composition comprising:
100 phr of a butyl rubber;
0.1 to 54 phr of an epoxy-modified styrenic block copolymer having:
at least one monoalkenyl arene polymer block A;
at least one conjugated diene polymer block B; and
at least one epoxy functional group or derivative thereof;
wherein the epoxy-modified styrenic block copolymer has a degree of epoxidation of 1- 99 wt.% in the conjugated diene polymer block B;
wherein the styrenic block copolymer, prior to epoxy modification with at least one epoxy functional group or derivative thereof, is selected from the group consisting of: (i) an unhydrogenated styrenic block copolymer, (ii) a partially hydrogenated styrenic block copolymer with a residual unsaturation of 2-15 mmol/g, and (iii) a hydrogenated styrenic block copolymer; and
wherein the rubber composition comprises less than 5 phr of an epoxidized soybean oil.

2. The rubber composition of claim 1, wherein the rubber composition has:
a relaxation modulus in the range of 2,000 to 500,000 Pa, measured according to ISO 6914:2021 at 80 °C and 1% strain; and
a yellowness index of less than 90 after 20 days of aging at 80 °C, measured according to ASTM E313.

3. The rubber composition of any of claims 1-2, wherein the rubber composition comprises less than 2 phr of epoxidized soybean oil.

4. The rubber composition of any of claims 1-2, wherein the styrenic block copolymer, prior to epoxy modification with at least one epoxy functional group or derivative thereof, is a partially hydrogenated styrenic block copolymer having a residual unsaturation of < 10 mmol/g.

5. The rubber composition of claim 4, wherein the partially hydrogenated styrenic block copolymer precursor has an average 1,2-vinyl or 3,4-vinyl content of 6-80 %.

6. The rubber composition of any of claims 1-2, wherein the styrenic block copolymer prior to epoxy modification is an unhydrogenated styrenic block copolymer having a structure selected from the group consisting of: A-B, A-B-A, A-B-A-B, (A-B-A)ₙX, (A-B)ₙX and mixtures thereof;
wherein
each block A is predominantly a polymer block of monoalkenyl arene monomers,
each block B is predominantly a partially hydrogenated polymer block of conjugated diene monomers;
X is a residue of a coupling agent; and n is ≥ 1.

7. The rubber composition of any of claims 1-2, wherein the styrenic block copolymer, prior to epoxy-modification, has a total polystyrene content of 10-50% based on the total weight of the styrenic block copolymer prior to partial hydrogenation.

8. The rubber composition of any of claims 1-2, wherein the monoalkenyl arene monomer is selected from the group consisting of: styrene, alpha-methyl styrene, methyl styrene, para-methyl styrene, ethyl styrene, propyl styrene, butyl styrene, tert-butyl styrene, dimethyl styrene, vinyl toluene, isomers of vinyl toluene, vinyl xylene, 1,1-vinyl biphenyl, vinyl naphthalene, vinyl anthracene, and mixtures thereof.

9. The rubber composition of any of claims 1-2, wherein the conjugated diene monomer is independently selected from the group consisting of: 1,3-butadiene, isoprene, 2,3-dimethyl-1,3-butadiene, 1-phenyl-1,3-butadiene, 1,3-pentadiene, 1,3-hexadiene, 3-butyl-1,3-octadiene, myrcene, farnesene, 1,3-cyclohexadiene, piperylene, and mixtures thereof.

10. The rubber composition of any of claims 1-2, wherein the epoxy-modified styrenic block copolymer, prior to epoxy-modification, has an average molecular weight of 10-500 kg/mol.

11. The rubber composition of any of claims 1-2, wherein the degree of epoxidation is 20-80 wt.% in the conjugated diene polymer block B.

12. The rubber composition of any of claims 1-2, wherein a rubber composition containing 0.5 to 5 phr epoxidized styrenic block copolymer has a yellowness index of at least 10% lower than a rubber composition not containing any epoxidized styrenic block copolymer, after 20 days of aging at 80 °C, measured according to ASTM E313.

13. The rubber composition of any of claims 1-2, wherein the butyl rubber is a halogenated butyl rubber selected from the group consisting of: a brominated butyl rubber, a chlorinated butyl rubber, and mixtures thereof.

14. The rubber composition of claim 13, wherein the halogenated butyl rubber has a halogen content of 0.1 to 10 wt. %, based on total weight of the halogenated butyl rubber.

15. A rubber composition comprising,
(a) 100 phr of the rubber composition of any of claims 1-14;
(b) 0.0001 to 30 phr of a polyolefin;
(c) 0.0001 to 5 phr of a tackifying resin; and
(d) 0.0001 to 10 phr of at least an additive.
